# EUROPEAN PATENT APPLICATION

(11) **EP 4 667 086 A1**
(43) Date of publication of application: **24.12.2025**
(21) Application number: 24756878.5
(22) Date of filing: 13.02.2024
(51) Int. Cl.: B01D 53/22

(54) **SEPARATION MEMBRANE SYSTEM AND SEPARATION MEMBRANE TEMPERATURE RAISING AND LOWERING METHOD**

(30) Priority: 16.02.2023 JP 2023022476
(71) Applicant: NGK Insulators, Ltd., Nagoya-shi, Aichi 467-8530 (JP)
(72) Inventor: SHIMIZU, Katsuya, Nagoya-shi, Aichi 467-8530 (JP); KOJIMA, Miyuki, Nagoya-shi, Aichi 467-8530 (JP); IIDA, Kazuki, Nagoya-shi, Aichi 467-8530 (JP); NAKAGAWA, Kosuke, Nagoya-shi, Aichi 467-8530 (JP); MAEHARA, Sota, Nagoya-shi, Aichi 467-8530 (JP); KAN, Hirofumi, Nagoya-shi, Aichi 467-8530 (JP)
(74) Representative: Mewburn Ellis LLP
(86) International application number: PCT/JP2024/004859
(87) International publication number: WO 2024/172035

(57) **Abstract**

Provided is a separation membrane system including a separation membrane, which enables rapid and precise temperature control of the separation membrane. The separation membrane system according to an embodiment of the present disclosure includes a separation membrane; a heating device; a temperature measurement device installed between the separation membrane and the heating device; and a supply line that allows a first gas and a second gas serving as a temperature adjusting gas to be mixed upstream of a position at which the temperature measurement device is installed, and allows a mixed gas of the first gas and the second gas to be supplied to the separation membrane. The temperature measurement device is configured to measure a temperature of the mixed gas supplied to the separation membrane. The temperature of the mixed gas is controlled by adjusting a flow rate of the second gas based on the temperature measured by the temperature measurement device.

## Description

### Technical Field

The present disclosure relates to a separation membrane system and a method of increasing and decreasing a temperature of a separation membrane.

### Background Art

Hitherto, investigations have been made on various methods for separating a desired component from a fluid containing two or more kinds of components. For example, a method including using a separation membrane that allows a specific component to selectively permeate therethrough has been known as one of such methods. A separation method using such a separation membrane sometimes includes temperature adjustment of the separation membrane so that the separation membrane fulfills a predetermined function. In this case, when a temperature change of the separation membrane is sudden, the separation membrane may break.

### Citation List

### Patent Literature

[PTL 1] JP 2013-94726 A

### Summary of Invention

### Technical Problem

A primary object of the present disclosure is to provide a separation membrane system including a separation membrane, which enables rapid and precise temperature control of the separation membrane.

### Solution to Problem

[1] According to an embodiment of the present disclosure, there is provided a separation membrane system, including: a separation membrane; a heating device; a temperature measurement device installed between the separation membrane and the heating device; and a supply line that allows a first gas and a second gas serving as a temperature adjusting gas to be mixed upstream of a position at which the temperature measurement device is installed, and allows a mixed gas of the first gas and the second gas to be supplied to the separation membrane. The temperature measurement device is configured to measure a temperature of the mixed gas supplied to the separation membrane. The temperature of the mixed gas is controlled by adjusting a flow rate of the second gas based on the temperature measured by the temperature measurement device.
[2] In the separation membrane system according to the above-mentioned item [1], the first gas and the second gas may be mixed together upstream of the heating device.
[3] According to an embodiment of the present disclosure, there is provided a method of increasing and decreasing a temperature of a separation membrane, including: a step of obtaining a mixed gas by mixing a first gas and a second gas serving as a temperature adjusting gas; and a step of supplying the mixed gas to a separation membrane.
[4] The method of increasing and decreasing a temperature of a separation membrane according to the above-mentioned item [3] may further include controlling a temperature increase/decrease rate of the separation membrane by adjusting a mixing ratio between the first gas and the second gas.
[5] In the method of increasing and decreasing a temperature of a separation membrane according to the above-mentioned item [3] or [4], the second gas may contain a gas that has permeated through the separation membrane.
[6] In the method of increasing and decreasing a temperature of a separation membrane according to any one of the above-mentioned items [3] to [5], the mixed gas may contain a gas that has permeated through the separation membrane.

### Advantageous Effects of Invention

According to the embodiment of the present disclosure, the separation membrane system including a separation membrane, which enables rapid and precise temperature control of the separation membrane, can be provided.

### Brief Description of Drawings

FIG. 1 is an explanatory diagram for illustrating the outline of a separation membrane system according to one embodiment of the present disclosure.
FIGS. 2 are explanatory diagrams for illustrating the outline of the separation membrane system according to one embodiment of the present disclosure.
FIG. 3 is an explanatory view for illustrating the schematic configuration of a separation membrane complex in one embodiment of the present disclosure.
FIG. 4 is a schematic cross-sectional view for illustrating the configuration of the separation membrane complex in one embodiment of the present disclosure.

### Description of Embodiments

### A. Separation Membrane System

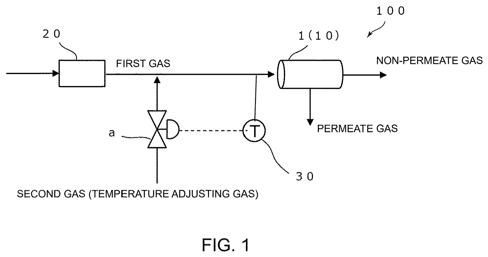

FIG. **1** is an explanatory diagram for illustrating the outline of a separation membrane system according to one embodiment of the present disclosure. A separation membrane system **100** includes: a separation membrane **1;** a heating device **20;** a temperature measurement device **30** installed between the separation membrane **1** and the heating device **20;** and a supply line that allows a first gas and a second gas serving as a temperature adjusting gas to be mixed upstream of a position at which the temperature measurement device **30** is installed, and allows a mixed gas of the first gas and the second gas to be supplied to the separation membrane. The temperature measurement device **30** measures the temperature of the mixed gas supplied to the separation membrane. In one embodiment, the separation membrane **1** may form a separation membrane complex **10.** The separation membrane **1** may separate a mixed fluid supplied to the separation membrane **1,** based on permeability. FIG. **1** schematically shows an embodiment in which the mixed gas is supplied to the separation membrane **1** having a cylindrical shape to perform temperature adjustment (temperature increase/decrease) of the separation membrane complex **10** (substantially the separation membrane **1**).

The separation membrane system may include any appropriate gas flow rate adjustment means **"a"** capable of performing flow rate adjustment of the second gas (temperature adjusting gas). The flow rate of the second gas (temperature adjusting gas) is adjusted based on the temperature measured with the temperature measurement device. The temperature of the mixed gas is controlled by adjusting the flow rate of the second gas (temperature adjusting gas) (that is, with the second gas at the adjusted flow rate). Herein, the term "flow rate of the second gas (temperature adjusting gas)" means the flow rate of the second gas before (preferably, immediately before) the mixing.

In one embodiment, the second gas (temperature adjusting gas) may be mixed with the first gas having a temperature higher than that of the second gas. In this embodiment, the temperature of the first gas immediately before the mixing is, for example, 400°C or less. Further, the temperature is preferably from 80°C to 200°C. When the temperature of the first gas is set to fall within the above-mentioned ranges, steam heating can be used as the heating device. The temperature is more preferably from 80°C to 150°C. When the temperature is set to fall within the above-mentioned range, low-pressure steam heating, which is lower in cost, can be used as the heating device. The first gas immediately before the mixing may be a gas heated by the heating device (heated gas). That is, the first gas and the second gas may be mixed together downstream of the heating device. When the gases are mixed downstream, the temperature of the mixed gas can be more precisely controlled. In this embodiment, the upper limit value of the temperature of the second gas (temperature adjusting gas) is, for example, 80°C though the upper limit value is not limited to any particular value. When the upper limit value is set to fall within the above-mentioned range, a low-cost flow rate adjustment mechanism such as a flow rate adjustment valve using, for example, a rubber sheet can be used. It is preferred that the lower limit value thereof be, for example, 0°C or more, though the lower limit value is not limited to any particular value. When the lower limit value is set to fall within the above-mentioned range, the breaking of a pipe due to freezing can be prevented. In this embodiment, the temperature of the mixed gas obtained by mixing the second gas (temperature adjusting gas) with the first gas is, for example, from 60°C to 300°C. When the temperature of the mixed gas is set to fall within the above-mentioned range, the separation membrane can more easily demonstrate separation performance. It is preferred that the mixed gas of the first gas and the second gas (temperature adjusting gas) be supplied directly (that is, without passing through a temperature control device or the like) to the separation membrane. In one embodiment, the temperature of the mixed gas is preferably 90°C or more. When the temperature of the mixed gas falls within the above-mentioned range, the thermal energy of the first gas can be effectively used.

The first gas and the second gas (temperature adjusting gas) may be mixed together upstream of the heating device. When the gases are mixed upstream, the gases can be mixed under a state in which the first gas and the second gas, which are to be mixed together, have a small difference in temperature. Thus, it becomes easier to achieve a uniform temperature of the gases after the mixing. In this embodiment, the upper limit value of the temperature of the first gas immediately before the mixing is, for example, less than 80°C though the upper limit value is not limited to any particular value. When the upper limit value is set to fall within the above-mentioned range, a low-cost ancillary device such as a valve using, for example, a rubber sheet can be used. It is preferred that the lower limit value of the temperature of the first gas be, for example, 0°C or more, though the lower limit value is not limited to any particular value. When the lower limit value is set to fall within the above-mentioned range, the breaking of a pipe due to freezing can be prevented. In this embodiment, the upper limit value of the temperature of the second gas (temperature adjusting gas) is, for example, less than 80°C. When the upper limit value is set to fall within the above-mentioned range, a low-cost ancillary device such as a valve using, for example, a rubber sheet can be used. It is preferred that the lower limit value of the temperature of the second gas be 0°C or more, though the lower limit value is not limited to any particular value. When the lower limit value is set to fall within the above-mentioned range, the breaking of a pipe due to freezing can be prevented. In this embodiment, the upper limit value of the temperature of the mixed gas obtained by mixing the second gas (temperature adjusting gas) with the first gas is, for example, less than 80°C. When the upper limit value is set to fall within the above-mentioned range, a low-cost ancillary device such as a valve using, for example, a rubber sheet can be used. It is preferred that the lower limit value of the temperature of the mixed gas be, for example, 0°C or more, though the lower limit value is not limited to any particular value. When the lower limit value is set to fall within the above-mentioned range, the breaking of a pipe due to freezing can be prevented.

In the embodiment of the present disclosure, the separation membrane system that enables rapid and precise temperature control of the separation membrane by supplying the mixed gas obtained by mixing the second gas (temperature adjusting gas) with the first gas to the separation membrane can be provided. More specifically, the heating of a gas with a heating device has a feature in that the gas has a slow temperature change in response to output adjustment or ON/OFF of the heating device or it is difficult to frequently perform output adjustment or ON/OFF. In the embodiment of the present disclosure, however, the temperature of the gas to be supplied to the separation membrane can be controlled by combining heating using the heating device and mixing with the second gas (temperature adjusting gas). Thus, the temperature control of the separation membrane can be rapidly and precisely performed. Further, the temperature control of the separation membrane can be performed as described above while an increase/decrease in output of the heating device is reduced. The separation membrane system that can express the above-mentioned effects enables easy and highly precise control of a temperature change rate. Thus, when the temperature of the separation membrane is required to be gradually changed, the separation membrane system is particularly useful. The separation membrane system is particularly useful when, for example, the temperature of the separation membrane, which may break due to a sudden temperature change, is increased and/or decreased.

In one embodiment, the first gas and the second gas (temperature adjusting gas) contain a polar gas. The polar gas has high affinity and adsorptivity to the separation membrane. Thus, the temperature adjustment of the separation membrane can be efficiently performed by using gases containing the polar gas as the gases. Herein, the term "polar gas" refers to a gas containing heteronuclear molecules. Examples of the polar gas include CO₂ and H₂O.

In one embodiment, the separation membrane complex may be configured to have a cylindrical shape. When a fluid to be treated is introduced at a predetermined introduction pressure (e.g., 0.5 MPa or more) into the inside of the cylindrical structure of the separation membrane complex, a fluid that permeates through the separation membrane complex (substantially the separation membrane) can be delivered from the surface of the separation membrane complex, and a fluid that does not permeate through the separation membrane complex can be passed in the longitudinal direction of the cylindrical separation membrane complex. As a result, the fluid to be treated can be separated. The separation membrane complex may include a single cylindrical structure or a plurality of cylindrical structures. The separation membrane complex preferably includes a plurality of cylindrical cells extending in the longitudinal direction.

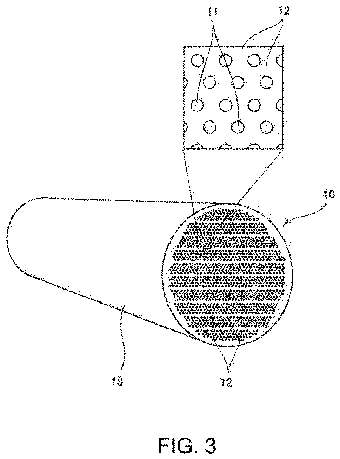

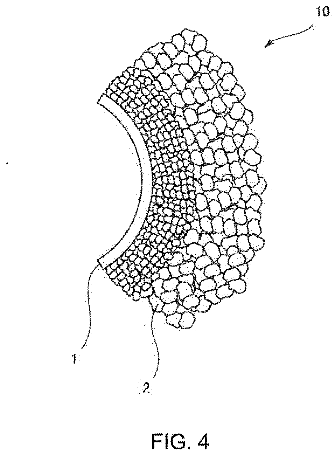

FIG. **3** is an explanatory view for illustrating the schematic configuration of a separation membrane complex in one embodiment of the present disclosure. FIG. **4** is a schematic cross-sectional view for illustrating the configuration of the separation membrane complex in one embodiment of the present disclosure. The separation membrane complex **10** has a plurality of cells **11** formed therein. The cells **11** are each formed in a cylindrical shape extending in the longitudinal direction of the separation membrane complex **10.** The cells **11** may serve as a flow path for the fluid to be treated. The separation membrane complex **10** includes the separation membrane **1,** and the separation membrane **1** is arranged on a porous substrate **2.** In one embodiment, the separation membrane **1** may be arranged so as to cover approximately the entire inside surface (that is, cell side surface) of the porous substrate **2.** Of the fluid to be treated that is passed through the cells **11,** a fluid having high permeability through the separation membrane **1** (permeate fluid) permeates through the separation membrane complex **10** to be delivered from a side surface **13** of the separation membrane complex **10.** Meanwhile, a fluid having low permeability through the separation membrane **1** (non-permeate fluid) is passed through the flow paths of the cells **11** to be delivered. Although not shown, the separation membrane complex may be housed in any appropriate outer cylinder for use, and a flow path for a non-permeate fluid may be defined inside the outer cylinder. The separation membrane complex is not limited to that having the configuration described above, and may include the separation membrane formed on the outer surface of a tubular porous substrate. In such a separation membrane complex, the outside of the tubular porous substrate may serve as a flow path for the fluid to be treated. The permeate fluid permeates through and is delivered from the side surface of the separation membrane complex into the inside of the porous substrate, and the non-permeate fluid passes and is delivered outside of the porous substrate.

In one embodiment, the temperature of the separation membrane is increased by using the mixed gas obtained by mixing the second gas (temperature adjusting gas) with the first gas. It is preferred that the temperature of the separation membrane complex (substantially the separation membrane) be increased before the supply of the fluid to be treated so that the separation function as described above is fulfilled. A temperature increase rate can be controlled by using a mixing ratio between the first gas and the second gas (temperature adjusting gas) and the temperatures of the first gas and the second gas (temperature adjusting gas).

Further, the temperature of the separation membrane may be decreased by using the mixed gas obtained by mixing the second gas (temperature adjusting gas) with the first gas. A temperature decrease rate can be controlled by using a mixing ratio between the first gas and the second gas (temperature adjusting gas) and the temperatures of the first gas and the second gas (temperature adjusting gas).

The separation membrane system may include a plurality of separation membrane complexes. The plurality of separation membrane complexes may be arranged in series, in parallel, or in a combination of series and parallel. When the separation membrane complexes are arranged in parallel, the separation membrane complexes arranged in parallel may be operated simultaneously or are not always required to be operated simultaneously.

### (Separation Membrane)

In one embodiment, in the separation membrane, the mixed fluid can be separated by a difference in permeability through the separation membrane having fine pores. For example, the fluid to be treated can be separated by the so-called molecular sieve effect that the permeability is controlled depending on the size of the molecule for forming the fluid and the pore diameter of the separation membrane.

The separation membrane is preferably an inorganic membrane. A material for forming the separation membrane is, for example, zeolite, silica, or carbon.

In one embodiment, a zeolite membrane is used as the above-mentioned separation membrane. The zeolite membrane includes a membrane formed from zeolite on the surface of the porous substrate. The zeolite membrane may contain two or more kinds of zeolites different from each other in structure or composition.

For example, the following zeolites may each be used as the zeolite for forming the zeolite membrane: zeolite in which an atom (T atom) positioned on the center of an oxygen tetrahedron (TO₄) for forming the zeolite is formed of only Si, or Si and Al; AlPO-type zeolite in which the T atom is formed of Al and P; SAPO-type zeolite in which the T atom is formed of Si, Al, and P; MAPSO-type zeolite in which the T atom is formed of magnesium (Mg), Si, Al, and P; and ZnAPSO-type zeolite in which the T atom is formed of zinc (Zn), Si, Al, and P. Part of the T atom may be substituted with any other element.

Examples of the zeolite include AEI-type, AEN-type, AFN-type, AFV-type, AFX-type, BEA-type, CHA-type, DDR-type, ERI-type, ETL-type, FAU-type (X-type or Y-type), GIS-type, LEV-type, LTA-type, MEL-type, MFI-type, MOR-type, PAD-type, RHO-type, SAT-type, and SOD-type zeolites. The maximum number of members in the ring of the zeolite is preferably 12 or less, more preferably 10 or less, still more preferably 8 or less. In addition, the number is preferably 6 or more, more preferably 8 or more.

The zeolite membrane contains, for example, Si. The zeolite membrane may contain, for example, any two or more of Si, Al, and P. The zeolite membrane may contain an alkali metal. The alkali metal is, for example, sodium (Na) or potassium (K). When the zeolite membrane contains a Si atom and an Al atom, a Si/Al ratio in the zeolite membrane is, for example, 1 or more and 100,000 or less. The Si/Al ratio is a molar ratio of a Si element to an Al element in the zeolite membrane. The Si/Al ratio is preferably 5 or more, more preferably 20 or more, still more preferably 100 or more. The ratio is preferably as high as possible. The Si/Al ratio in the zeolite membrane may be adjusted by adjusting, for example, a blending ratio between a Si source and an Al source in a starting material solution described later.

The average pore diameter of the separation membrane is, for example, from 0.2 nm to 1 nm, more preferably from 0.3 nm to 0.5 nm. The pore diameter of the separation membrane may be adjusted in accordance with desired composition of a permeate fluid. A separation membrane having a smaller average pore diameter has higher selectivity. The average pore diameter of the separation membrane is smaller than the average pore diameter of the porous substrate. When the separation membrane is a zeolite membrane, the arithmetic average of the short diameter and long diameter of an n-membered ring pore, where "n" represents the maximum number of members in the ring of the zeolite, is adopted as the average pore diameter. The term "n-membered ring pore" refers to such a pore that the number of oxygen atoms in a portion in which the oxygen atom are bonded to T atoms to form a ring structure is "n". When the zeolite has a plurality of n-membered ring pores equal to each other in "n", the arithmetic average of the short diameters and long diameters of all the n-membered ring pores is adopted as the average pore diameter of the zeolite. The average pore diameter of the zeolite membrane is determined by the framework structure of the zeolite and may be obtained from a value disclosed in the "Database of Zeolite Structures" of the International Zeolite Association, [online], from the Internet <URL: http://www.iza-structure.org/databases/>.

The thickness of the separation membrane is, for example, from 0.05 µm to 30 µm, preferably from 0.1 µm to 20 µm, more preferably from 0.5 µm to 10 µm. A thicker separation membrane has higher selectivity. A thinner separation membrane increases a permeation rate.

The surface roughness (Ra) of the separation membrane is, for example, 5 µm or less, preferably 2 µm or less, more preferably 1 µm or less, still more preferably 0.5 µm or less. Herein, the surface roughness (Ra) is an arithmetic surface roughness Ra measured in conformity with JIS B 0601.

The separation membrane may be formed by any appropriate method in accordance with a material for forming the membrane. For example, the zeolite membrane may be obtained by: applying zeolite serving as a seed crystal onto a porous substrate; immersing the porous substrate to which the seed crystal has adhered in a starting material solution; and growing zeolite from the seed crystal serving as a nucleus through hydrothermal synthesis. The starting material solution contains, for example, a silica source, an alumina source, organic matter, an alkali source, or water. A heating temperature in the hydrothermal synthesis is set to, for example, from 60°C to 200°C. A heating time is set to, for example, from 1 hour to 240 hours. In addition, the separation membrane may be formed by using a starting material slurry obtained by mixing an organic binder, a ceramic starting material, and a solvent.

### (Porous Substrate)

The porous substrate is configured to allow a gas to permeate therethrough. In the example illustrated in FIG. **4****,** the porous substrate **2** is a so-called monolith-type substrate in which an integrally-molded continuous columnar body has formed therein a plurality of through holes each extending in the longitudinal direction. In the example illustrated in FIG. **4****,** the porous substrate **2** has an approximately columnar shape. The cross-section perpendicular to the longitudinal direction of each of the through holes has, for example, an approximately circular shape. The separation membrane may be formed on the inside surfaces of the through holes to form a separation membrane complex (porous substrate/separation membrane) having cells formed therein. The shape of the porous substrate is not limited to the above-mentioned examples, and may be, for example, a honeycomb shape, a plate-like shape, a tubular shape, a cylindrical shape, a columnar shape, or a polygonal prism shape. In one embodiment, the separation membrane may be formed on the outside surface of a tubular porous substrate.

The length of the porous substrate is, for example, from 10 cm to 200 cm. The outer diameter of the porous substrate is, for example, from 0.5 cm to 30 cm. When the porous substrate has through holes, the distance between the central axes of adjacent through holes is, for example, from 0.3 mm to 10 mm. When the porous substrate has a tubular shape or a cylindrical shape, the thickness of the porous substrate is, for example, from 0.1 mm to 10 mm.

Any appropriate material is used as a material for the porous substrate. In one embodiment, the porous substrate is formed from a ceramic sintered compact. Examples of the ceramic sintered compact selected as the material for the porous substrate include alumina, silica, mullite, zirconia, titania, yttria, silicon nitride, and silicon carbide.

The porous substrate may contain an inorganic binding material. At least one of titania, mullite, easily sinterable alumina, silica, glass frit, clay mineral, or easily sinterable cordierite may be used as the inorganic binding material.

The porous substrate may have a single-layer configuration or a multilayer configuration. In one embodiment, the porous substrate has a multilayer structure of layers having different pore diameters as illustrated in FIG. **4****.** It is preferred that the pore diameter of the layer closer to the inside (i.e., a separation membrane side) be smaller.

The average pore diameter of the porous substrate is, for example, from 0.01 µm to 70 µm, preferably from 0.05 µm to 25 µm. The average pore diameter of the porous substrate on the separation membrane side is from 0.01 µm to 1 µm, preferably from 0.05 µm to 0.5 µm. With regard to the distribution of the pore diameters in the entirety including the surface and inside of the porous substrate, D5 is, for example, from 0.01 µm to 50 µm, D50 is, for example, from 0.05 µm to 70 µm, and D95 is, for example, from 0.1 µm to 2,000 µm. The porosity of the porous substrate on the separation membrane side is, for example, from 25% to 50%. The average pore diameter of the porous substrate may be measured with a mercury porosimeter, a perm porometer, a nano-perm porometer, or the like.

The length of the separation membrane complex including the separation membrane and the porous substrate is, for example, from 10 cm to 200 cm. The outer diameter of the separation membrane complex is, for example, from 0.5 cm to 30 cm. The distance between the central axes of adjacent cells is, for example, from 0.3 mm to 10 mm. The inner diameter of each of the cells is, for example, from 1 mm to 10 mm.

### (Heating Device)

Any appropriate heating device can be used as the heating device. Examples of the heating device include a double pipe for steam, a steam trace, a steam jacket, and a double pipe for a heat medium.

The above-mentioned separation membrane system may further include any appropriate element. For example, the separation membrane system may include a supplying portion for supplying a fluid, a collecting portion for collecting a fluid that has passed through the separation membrane complex, and a pressure adjusting portion for adjusting the pressure of a fluid flow path. The configuration of the separation membrane system is described in, for example, WO 2018/225325 A1, the description of which is incorporated herein by reference.

Further, the separation membrane system may include a cooling device for generating the second gas (temperature adjusting gas). Any appropriate cooling device can be used as the cooling device. Examples of the cooling device include a jacket type cooling device and a multi-pipe cooling device.

### (Temperature Measurement Device)

Any appropriate temperature measurement device can be used as the temperature measurement device as long as the effects of the present disclosure are obtained.

### B. Method of Increasing and Decreasing Temperature of Separation Membrane

A method of increasing and decreasing a temperature of a separation membrane according to one embodiment of the present disclosure includes: a step of obtaining the mixed gas by mixing the second gas (temperature adjusting gas) with the first gas; and a step of supplying the mixed gas to the separation membrane. In this embodiment, the temperature of the separation membrane can be increased or decreased by mixing the second gas (temperature adjusting gas) with the first gas and supplying the mixed gas that has been subjected to temperature adjustment to the separation membrane.

The separation membrane may have the configuration described in the section A. In one embodiment, as described above, the separation membrane may form a separation membrane complex.

In one embodiment, the temperature increase rate and the temperature decrease rate of the separation membrane are controlled by adjusting the mixing ratio between the first gas and the second gas (temperature adjusting gas). The mixing ratio between the first gas and the second gas (temperature adjusting gas) is set to any appropriate ratio in accordance with the temperatures of the gases. The mixing ratio of the second gas (temperature adjusting gas) to the first gas (molar flow rate ratio (second gas/first gas)) is, for example, more than 0 and 10 or less.

As described above, the first gas at the time of mixing with the second gas (temperature adjusting gas) may be a gas that has been heated by any appropriate heating device or a gas before being heated by the heating device.

The second gas (temperature adjusting gas) may be a second gas (temperature adjusting gas) obtained by any appropriate method. In one embodiment, the second gas (temperature adjusting gas) may be a gas at room temperature. Further, the second gas (temperature adjusting gas) may be a gas that has been cooled by any appropriate cooling device described above.

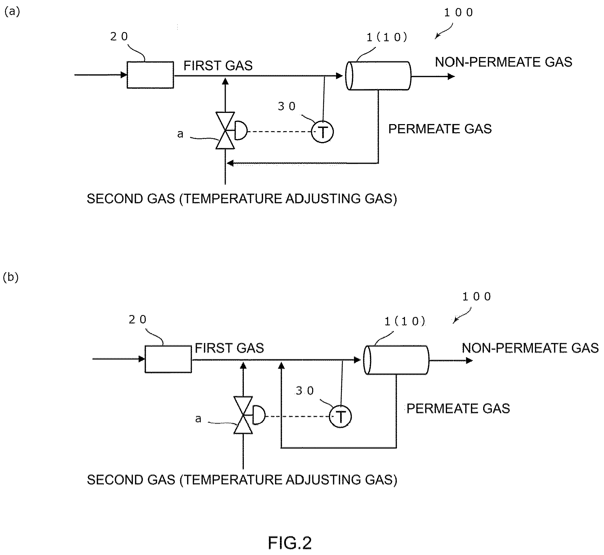

In one embodiment, the second gas (temperature adjusting gas) contains a gas that has permeated through the separation membrane (FIG. **2(a)**). Thus, an exhaust gas can be effectively used. Further, the second gas (temperature adjusting gas) may contain a non-permeate gas delivered from the separation membrane.

In one embodiment, the mixed gas obtained by mixing the second gas (temperature adjusting gas) with the first gas contains a gas that has permeated through the separation membrane (FIG. **2(b)**). Thus, an exhaust gas can be effectively used. Further, the mixed gas obtained by mixing the second gas (temperature adjusting gas) with the first gas may contain a non-permeate gas delivered from the separation membrane.

In one embodiment, heat exchange with the gas that has permeated through the separation membrane and/or the non-permeate gas that has been delivered from the separation membrane may also be used in combination for the temperature adjustment of the mixed gas. Using the heat exchange can reduce a load of the heating device and thus enables rapider and more precise temperature adjustment of the separation membrane.

The position at which the second gas (temperature adjusting gas) is mixed is not limited to any particular position as long as the position is upstream of the temperature measurement device, but it is preferred that the position be closer to the temperature measurement device. Such a position enables rapider and more precise temperature adjustment of the separation membrane.

### Industrial Applicability

The separation membrane system of the present disclosure can be suitably used in a process of separating components in a mixed gas.

### Reference Signs List

- **1**: separation membrane
- **2**: porous substrate
- **10**: separation membrane complex

## Claims

1. A separation membrane system, comprising:
a separation membrane;
a heating device;
a temperature measurement device installed between the separation membrane and the heating device; and
a supply line that allows a first gas and a second gas serving as a temperature adjusting gas to be mixed upstream of a position at which the temperature measurement device is installed, and allows a mixed gas of the first gas and the second gas to be supplied to the separation membrane,
wherein the temperature measurement device is configured to measure a temperature of the mixed gas supplied to the separation membrane, and
wherein the temperature of the mixed gas is controlled by adjusting a flow rate of the second gas based on the temperature measured by the temperature measurement device.

2. The separation membrane system according to claim 1, wherein the first gas and the second gas are mixed together upstream of the heating device.

3. A method of increasing and decreasing a temperature of a separation membrane, comprising:
a step of obtaining a mixed gas by mixing a first gas and a second gas serving as a temperature adjusting gas; and
a step of supplying the mixed gas to a separation membrane.

4. The method of increasing and decreasing a temperature of a separation membrane according to claim 3, further comprising controlling a temperature increase/decrease rate of the separation membrane by adjusting a mixing ratio between the first gas and the second gas.

5. The method of increasing and decreasing a temperature of a separation membrane according to claim 3 or 4, wherein the second gas contains a gas that has permeated through the separation membrane.

6. The method of increasing and decreasing a temperature of a separation membrane according to claim 3 or 4, wherein the mixed gas contains a gas that has permeated through the separation membrane.
